# EUROPEAN PATENT SPECIFICATION

(11) **EP 2 031 699 B1**
(45) Date of publication and mention of the grant of the patent: **30.09.2020**
(21) Application number: 08162605.3
(22) Date of filing: 19.08.2008
(51) Int. Cl.: H01Q 1/38, H01Q 1/24, H01Q 1/36

(54) **Electrical signal connecting unit, antenna device and mobile communication device having the same**
Einheit zur Verbindung elektrischer Signale, Antennenvorrichtung und Mobilkommunikationsvorrichtung damit
Unité de connexion de signal électrique, dispositif d'antenne et dispositif de communication doté de ceux-ci

(30) Priority: 31.08.2007 KR 20070088391
(43) Date of publication of application: 04.03.2009
(73) Proprietor: Samsung Electronics Co., Ltd., Suwon-si, Gyeonggi-do, 443-742 (KR)
(72) Inventor: Cho, Young-Wan, Gyeonggi-do (KR)
(74) Representative: HGF

(56) References cited:
- EP-A1- 1 422 787
- WO-A-03/050915
- WO-A-2006/011572
- JP-A- 11 220 319
- JP-A- 2006 033 583
- US-A- 6 075 500

## Description

### BACKGROUND OF THE INVENTION

### 1. Field of the Invention

The present invention relates to a mobile communication device and, more particularly, to an electrical signal connecting unit and an antenna device, by which a length of antenna can be easily disposed inside a mobile communication device having a plurality of boards, and a mobile communication device having the same.

### 2. Description of the Related Art

Typically, mobile communication devices are electronic devices that can exchange, via wireless communication, voice and video information with a counterpart.

Through the distribution of the mobile communication devices, users can exchange information regardless of location.

The size of the mobile communication devices is also decreasing, so that the users can carry them more easily.

Recently, functions of the mobile communication device are not limited to the exchange of voice and video information, but also include other functions, such as user convenient function and entertainment function, which are newly added.

A user can enjoy various functions, such as watching a movie, listening to music, and communicating with a counterpart, using one mobile communication device. The user can also receive information using a receiver, and perform a voice communication if necessary. Thus, the time that a user carries and uses the mobile communication device is gradually increasing.

Among these functions, the function of receiving a frequency modulation (FM) radio broadcast is carried out by a receiver circuit of an FM radio receiver, which is mounted inside the mobile communication device.

The FM radio receiver circuit is highly integrated to such a degree that it can be realized with a single chip and some passive devices.

An antenna is required to be long enough to raise reception efficiency. This, however, makes it difficult to dispose the antenna inside the mobile communication device.

Conventionally, in order to overcome such a problem, the antenna having a required length is stacked on a portion of an internal board of the mobile communication device, or is disposed inside an earphone line or a speaker line, which is separately provided. Otherwise, an active antenna is used.

However, an antenna with a size of 1mm or more cannot be disposed on the board of the mobile communication device, which is gradually reducing in size EP1422787A1 discloses a mobile device comprising two housing portions. The device comprises an antenna which radiating portion is placed in the upper housing.

In the case where the earphone line or the speaker line is used, FM reception efficiency becomes terribly poor when the earphone or speaker line is detached from the mobile communication device.

While the active antenna can reduce the length of the antenna to a predetermined value, a separate electronic circuit having an active rod transistor is required to be disposed on the board, thereby increasing the manufacturing cost of the mobile communication device.

### SUMMARY OF THE INVENTION

To address the above-discussed deficiencies of the prior art, it is a primary object to provide an electrical signal connecting unit, an antenna device and a mobile communication device having the same, in which a predetermined length of antenna used for receiving FM radio signals is disposed, with a multiple structure, in a predetermined area in order to minimize the construction area of the antenna.

The invention is also directed to provide an electrical signal connecting unit, an antenna device and a mobile communication device having the same, in which a predetermined length of antenna used for receiving FM radio signals is disposed, with a multiple structure, in a predetermined area of printed circuit boards (PCBs), on which electronic components are mounted, and connector units, which electrically connect the PCBs to each other.

The invention is also directed to provide an electrical signal connecting unit, an antenna device and a mobile communication device having the same, in which a predetermined length of antenna used for receiving FM radio signals is easily disposed, with a multiple structure, inside the mobile communication device, so that excellent sensitivity of receiving FM signals can be obtained without the use of a separate external antenna unit.

The present invention pertains to a mobile communication device according to claim 1.

Also disclosed is an electrical signal connecting unit including a predetermined length of soft connector body; a path pattern formed along one path on the connector body, with a plurality of pattern portions thereof extending in different path directions; and an antenna disposed on the path pattern, opposite ends of the antenna protruding through opposite ends of the connector body.

The path pattern is formed in the longitudinal direction of the connector body.

The path pattern is formed across the longitudinal direction of the connector body.

In an example not forming part of the invention, the path pattern may be wound on outer circumferential portions of the connector body along the longitudinal direction of the connector body.

Also disclosed is an antenna device including a plurality of boards made of a rigid material, each of the boards having a connector; at least one connector body having a predetermined length, the connector bodies made of a soft material and connecting the boards; a main path pattern formed along one path on the connector body, with pattern portions thereof extending in different path directions; and an antenna disposed on the main path pattern, and connected, at opposite ends thereof, to the connectors, respectively, the opposite ends of the antenna elements protruding opposite ends of the connector body.

The main path pattern is formed in the longitudinal direction of the connector body.

The main path pattern is formed across the longitudinal direction of the connector body.

In an example not forming part of the invention, the main path pattern may be wound on outer circumferential portions of the connector body along the longitudinal direction of the connector body.

Each of the boards may have a sub-path pattern, which connects the connector to the main path pattern, and on which a portion of the antenna protruding from the connector body is disposed.

Here, the sub-path pattern may be formed along one path, with pattern portions of the sub-path pattern extending in different path directions.

One of the boards has a receiver, which receives voice information, and an antenna output terminal electrically connected to the receiver.

Here, the antenna output terminal may have a predetermined length of signal line, which sends out the voice information.

In addition, a predetermined length of antenna is provided inside the signal line.

Furthermore, a predetermined length of bar antenna composed of slidable overlapping sections may be disposed on the connector.

One of the boards may have multiple layers of board bodies.

Here, each of the board bodies may have an antenna pattern, which is shaped to extend the antenna disposed on the sub-path pattern.

Also disclosed is a mobile communication device including a main body, on which a first board made of a rigid material is disposed; a sub-body, on which a second board made of a soft material is disposed, the sub-body slidably coupled to the main body; a predetermined length of connector body made of a soft material, and connecting the first and second boards to each other; a main path pattern formed along one path on the connector body, with pattern portions thereof extending in different path directions; and an antenna disposed on the main path pattern, and connected, at opposite ends thereof, to the connectors, respectively, the opposite ends of the antenna elements protruding opposite ends of the connector body.

The main path pattern may be formed in the longitudinal direction of the connector body.

The main path pattern may be formed across the longitudinal direction of the connector body.

The main path pattern may be wound on outer circumferential portions of the connector body along the longitudinal direction of the connector body.

Each of the boards may have a sub-path pattern, which connects the connector to the main path pattern, and on which a portion of the antenna protruding from the connector boy is disposed.

Here, the sub-path pattern may be formed along one path, with pattern portions of the sub-path pattern extending in different path directions.

One of the boards has a receiver, which receives voice information, and an antenna output terminal electrically connected to the receiver.

Here, the antenna output terminal may have a predetermined length of signal line, which sends out the voice information.

Furthermore, a predetermined length of antenna may be provided inside the signal line.

The second board may have multiple layers of board bodies.

Here, each of the board bodies may have an antenna pattern, which extends the antenna disposed on the sub-path pattern.

According to the invention as set forth above, a predetermined length of antenna used for receiving FM radio signals is disposed, with a multiple structure, in a predetermined area in order to minimize the construction area of the antenna.

Furthermore, a predetermined length of antenna used for receiving FM radio signals is disposed, with a multiple structure, in a predetermined area of PCBs, on which electronic components are mounted, and connector units, which electrically connect the PCBs.

Moreover, a predetermined length of antenna used for receiving FM radio signals is easily disposed, with a multiple structure, inside the mobile communication device, so that excellent sensitivity of receiving FM signals can be obtained without the use of a separate external antenna unit.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 is a perspective view illustrating a first embodiment of an electrical signal connecting unit of the present invention;
FIGURE 2 is an enlarged perspective view of the part A of FIGURE 1;
FIGURE 3 is a plan view illustrating the first embodiment of the electrical signal connecting unit of the present invention;
FIGURE 4 is a plan view illustrating a second embodiment of the electrical signal connecting unit of the present invention;
FIGURE 5 is a plan view illustrating a third embodiment of the electrical signal connecting unit of the present invention;
FIGURE 6 is a plan view illustrating an antenna device of the present invention;
FIGURE 7 is a perspective view illustrating a mobile communication device having the antenna device of the present invention;
FIGURE 8 is a perspective view illustrating the second board of the present invention to which a signal line is further connected; and
FIGURE 9 is a perspective view illustrating the second board of the present invention, which includes a plurality of board bodies.

### DETAILED DESCRIPTION OF THE PREFERRED EMBODIMENTS

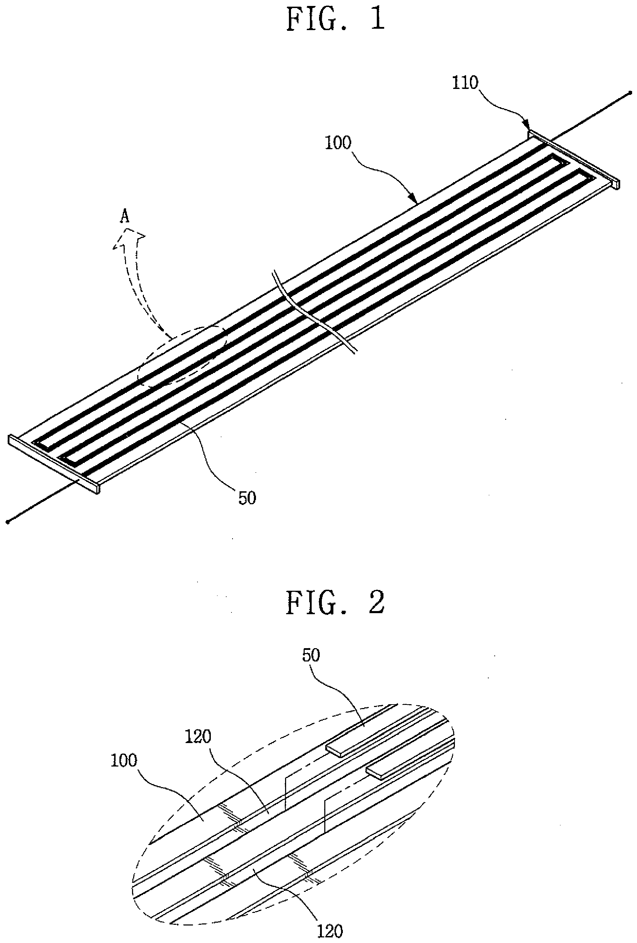

FIGURES 1 through 9, discussed below, and the various embodiments used to describe the principles of the present disclosure in this patent document are by way of illustration .

Those skilled in the art will understand that the principles of the present disclosure may be implemented in any suitably arranged mobile communication and antenna device.

Hereinafter, the following description will be made of an electrical signal connecting unit, an antenna device and a mobile communication device having the same of the present invention with reference to the accompanying drawings.

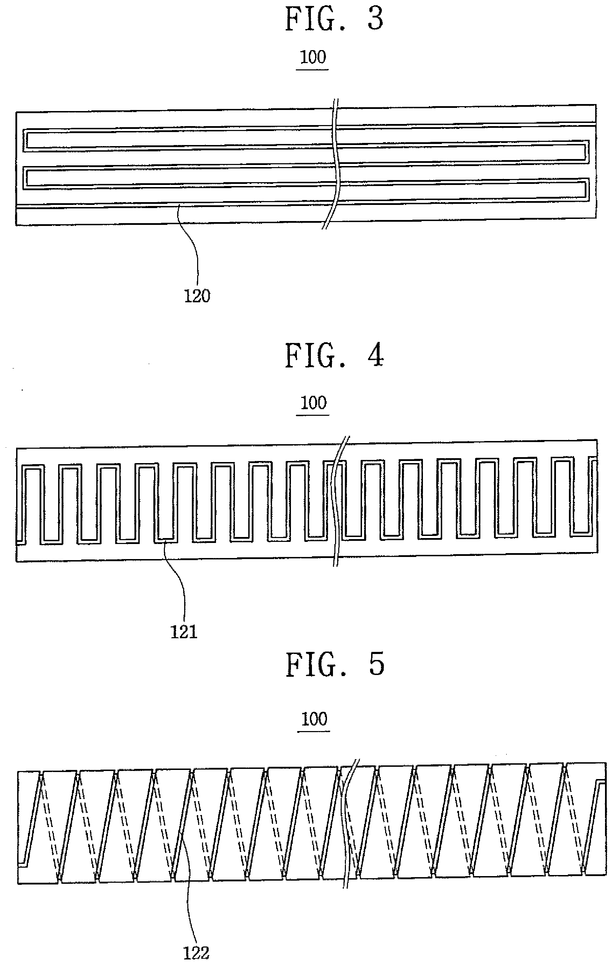

FIGURE 1 is a perspective view illustrating a first embodiment of the electrical signal connecting unit of the present invention, FIGURE 2 is an enlarged perspective view of the part A of FIGURE 1, FIGURE 3 is a plan view illustrating the first embodiment of the electrical signal connecting unit of the present invention, FIGURE 4 is a plan view illustrating a second embodiment of the electrical signal connecting unit of the present invention, and FIGURE 5 is a plan view illustrating a third embodiment of the electrical signal connecting unit of the present invention.

Referring to FIGURES 1 to 3, the first embodiment of the electrical signal connecting unit of the present invention includes a connector body 100, a path pattern 120 formed on the body 100 and an antenna 50 disposed on the path pattern 120.

The connector body 100 has predetermined dimensions such as width and length, and connectors 110 are provided at opposite ends of the connector body 100.

The connector body 100 is made of a soft material. For example, the connector body 100 may be implemented as a flexible printed circuit board (FPCB).

Although not shown in the drawings, the connector body 100 is provided with electric signal lines, which electrically connect the connectors 110, at the opposite ends of the connector body 100, to each other.

The path pattern 120 is formed along one path, and has a plurality of pattern portions extending in different directions.

In the path pattern 120 formed along one path, the pattern portions have a zigzag shape, and are spaced apart from each other at a predetermined interval.

Specifically, as shown in FIGURE 1, the path pattern 120 is formed along the length of the connector body 100.

It is preferable that the path pattern 120 be formed on one side of the connector body 100.

The path pattern 120 may also be formed on both sides of the connector body 100.

The antenna 50 is used for receiving FM radio signals, and may have a length of about 75cm from one end to the other.

Of course, the length of the antenna 50 may be determined to be longer or shorter than 75cm within a predetermined error range.

The antenna 50 is disposed on the path pattern 120, particularly, via an adhering means (not shown) such as an adhesive.

Here, opposite ends of the antenna 50 protrude through opposite ends of the connector body 100 to a predetermined length.

The antenna 50 in the length of 75cm, disposed on the path pattern 120, can be provided in a predetermined area of the connector body 100.

FIGURE 4 shows a second embodiment of the electrical signal connecting unit of the present invention.

Referring to FIGURE 4, the second embodiment of the electrical signal connecting unit includes a connector body 100, path pattern 121 and an antenna 50.

The connector body 100 may have the same construction as that of the first embodiment.

The path pattern 121 has pattern portions, which extend across the longitudinal direction of the connector body 100.

The pattern portions of the path pattern 121 are arrayed on the connector body 100, in a zigzag shape starting from one end to the other end of the connector body 100, and are spaced apart from each other.

The path pattern 121 may be formed on one side or both sides of the connector body 100.

The antenna 50 has a predetermined length of 75cm, and may be disposed on the path pattern 121.

The antenna 50 disposed on the path pattern 121 can be provided in a predetermined area of the connector body 100.

FIGURE 5 shows a third embodiment of the electrical signal connecting unit of the present invention.

Referring to FIGURE 5, the third embodiment of the electrical signal connecting unit includes a connector body 100, a path pattern 122 and an antenna 50.

The connector body 100 may have the same construction as that of the first or second embodiment.

The path pattern 122 has a plurality of pattern portions that extend across the longitudinal direction of the connector body 100.

The pattern portions of the path pattern 122 may be wound on the outer circumference of the connector body 100, along the longitudinal direction of the connector body 100.

Specifically, the pattern portions of the path pattern 122 are wound on the outer circumference of the connector body 100, in a zigzag shape starting from one end to the other end of the connector body 100, and are spaced apart from each other.

The path pattern 122 is formed on four sides of the connector body 100.

The antenna 50 has a predetermined length of 75cm, and may be disposed on the path pattern 122.

The antenna 50 disposed on the path pattern 122 can be provided in a predetermined area of the connector body 100.

As illustrated in FIGURES 1 to 5 and described above, the electrical signal connecting unit of the present invention may include any one of the path patterns 120, 121 and 122 according to the first to third embodiments of the present invention.

The path patterns 120, 121 and 122 according to the above-mentioned embodiments are formed in the predetermined area of the connector body 100, along various path directions, so that the antenna 50 having a length of, for example, 75cm can be easily housed in the area of the connector body 100.

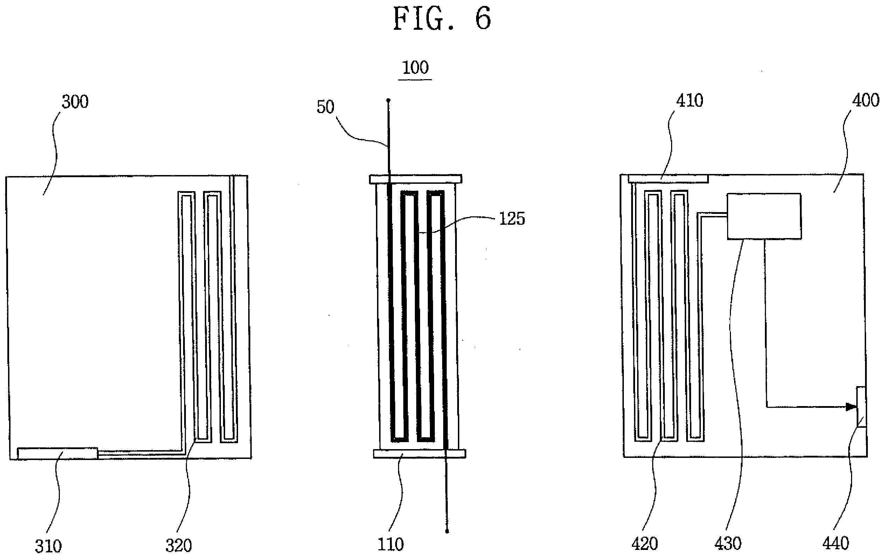

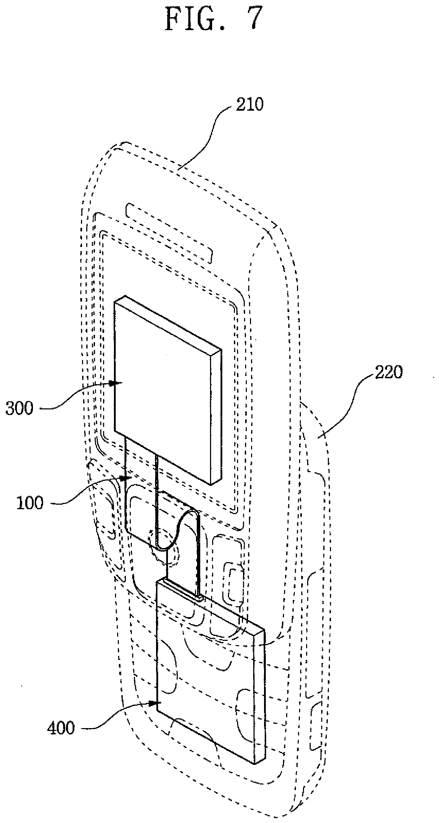

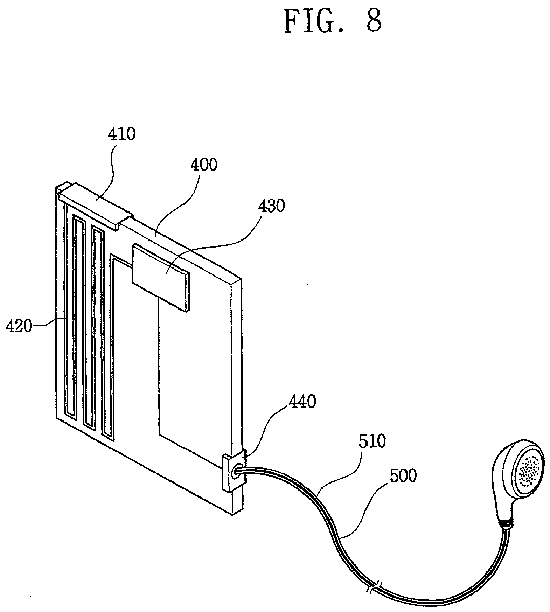

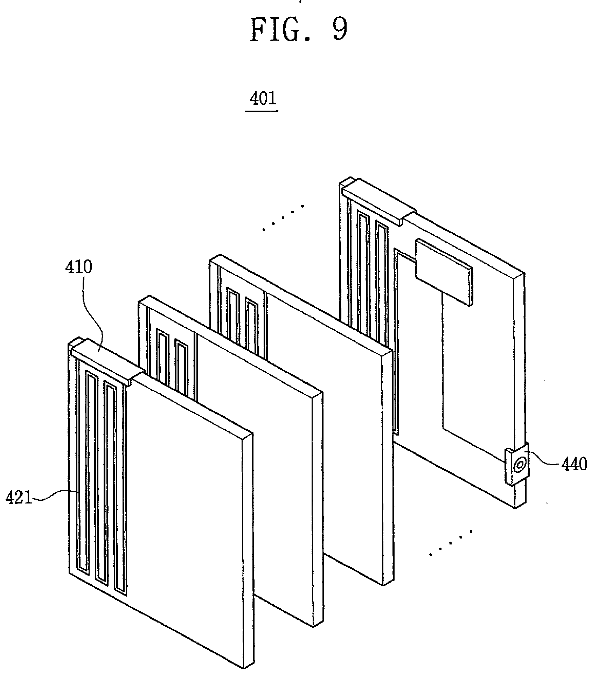

FIGURE 6 is a plan view illustrating an antenna device of the present invention, FIGURE 7 is a perspective view illustrating a mobile communication device having the antenna device of the present invention, FIGURE 8 is a perspective view illustrating the second board of the present invention, to which a signal line is further connected, and FIGURE 9 is a perspective view illustrating the second board of the present invention, which includes a plurality of board bodies.

Now, the antenna device of the present invention will be described with reference to FIGURE 6.

The antenna device of the invention includes a plurality of boards 300 and 400, a connector body 100 electrically connecting the boards 300 and 400 and a main path pattern 125 formed on the connector body 100.

The boards 300 and 400 may be provided as a pair.

Each of the boards 300 and 400 is made of a rigid material, and may be implemented as a printed circuit board (PCB) on which electronic components are mounted.

The boards 300 and 400 may be made of a soft material.

Connectors 310 and 410, which can communicate electrical signals with external devices, are provided at one end of the boards 300 and 400.

The connector body 100 may be made of a soft material such as an FPCB.

Alternatively, the connector body 100 may be made of a rigid material.

The connector body 100 is provided, at opposite ends, with connectors 110, each of which is fitted into a corresponding one of connectors 310 and 410 of the boards 300 and 400.

Here, the main path pattern 125 on the connector body 100 may have a plurality of pattern portions of different lengths and widths.

The main path pattern 125 is formed on the connector body 100.

The main path pattern 125 may have the same construction as that of any of the path patterns 120, 121 and 122, which were described above with reference to FIGURES 1 to 5.

The main path pattern 125 may be implemented in the same fashion as those of the first to third embodiments shown in FIGURES 1 to 5.

An antenna element 50 is disposed on the main path pattern 125.

The antenna element 50 has a predetermined length of, for example, 75cm.

Here, opposite ends of the antenna 50 protrude through opposite ends of the connector body 100 to a predetermined length.

The antenna 50 disposed on the main path pattern 125 can be provided in a predetermined area of the connector body 100.

Accordingly, the main path pattern 125 of the antenna device of the present invention can be provided according to any of the above-mentioned three embodiments.

The main path pattern 125 according to the three embodiments has a plurality of pattern portions, which extend along various path directions in the predetermined area of the connector body 100, so that the antenna 50 having a predetermined length of, for example, 75cm can be easily housed in the area of the connector body 100.

The board 300 has a sub-path pattern 320 connecting the connector 310 to the main path pattern 125, and the board 400 has a sub-path pattern 420 connecting the connector 410 to the main path pattern 125.

The sub-path pattern 320 of the board 300 can be formed on one path, and have a plurality of pattern portions extending in multiple different path directions. The sub-path pattern 420 of the board 400 can also be formed on one path, and have a plurality of pattern portions extending in multiple different path directions.

The sub-path patterns 320 and 420 may have the same construction as that of the path patterns 120, 121 and 122, which were described above with reference to FIGURES 1 to 5.

One of the boards 300 and 400 (for example, the board 400) is provided with a receiver 430 that receives voice information.

The receiver 430 may be implemented as a frequency modulation (FM) radio receiver.

Referring to FIGURES 6 and 8, the board 400 having the receiver 430 is also provided with an antenna output terminal 440, which is electrically connected to the receiver 430.

The antenna output terminal 440 is also electrically connected to a signal line 500.

The signal line 500 is a predetermined length of electric wire that outputs voice signal to an external device. The signal line 500 may be implemented as an earphone line or a speaker line.

In addition, a predetermined length of antenna 510 may be disposed inside the signal line 500.

Thus, the length of the antenna 50 disposed between the main path pattern 125 and the sub-path patterns 320 and 420 can be increased by the length of the antenna 510 inside the signal line 500.

This, as a result, can improve the sensitivity of receiving voice information at the receiver 430.

In addition, although not shown in the drawings, a predetermined length of bar antenna composed of slidable overlapping sections can also be disposed on one of the boards 300 and 400.

Hence, the length of the antenna 50, disposed on the main path pattern 125 and the sub-path patterns 320 and 420, can be further increased by the length of the bar antenna.

As shown in FIGURE 9, one of the boards 300 and 400 (for example, the board 400) may include a plurality of board bodies 401, which are placed one above another at a predetermined interval from each other.

In this fashion, the board bodies 401 form a multi-layer structure.

Each of the board bodies 401 may also have an antenna pattern 421, which is shaped to extend the length of the antenna disposed on the sub-path pattern 420.

The length of the antenna pattern 421 can be extended according to the number of the board bodies 401, which are placed one above another, so that the antenna 50 of the invention can be further extended by the length of the main path pattern 125, the length of the sub-path patterns 320 and 420 and the length of the antenna pattern 421, which are added together.

Next, a mobile communication device having an antenna device of the invention will be described with reference to FIGURE 7.

The mobile communication device of the invention includes a main body 210 and a sub body 220, which is slidably coupled to the main body 210.

Although not shown in the drawings, the slidable coupling structure may include a sliding groove and a sliding protrusion, which is designed to fit into the sliding groove to slide.

The sliding protrusion may be formed on one of the main body 210 and the sub body 220, along the sliding direction, and the sliding groove may be formed in one of the main body 210 and the sub body 220.

A first board 300, substantially the same as that shown in FIGURE 6, is disposed inside the main body 210, and electronic components (not shown) are mounted on the first board 300.

A second board 400 on which electronic components are mounted is disposed inside the sub body 220.

A connector 310 is provided at one end of the first board 300, and a connector 410 is provided at one end of the second board 300.

The first and second boards 300 and 400 may be implemented as a PCB, which is made of a rigid material.

The first and second boards 300 and 400 are electrically connected to each other by the connector body 100.

The connector body 100 is implemented as an FPCB, which is made of a soft body.

A main path pattern 125 is disposed on the connector body 100, and has a plurality of pattern portions extending along different path directions on one path. An antenna 50 is also disposed on the connector body 100, and is connected, at opposite ends thereof, to the connectors 310 and 410, respectively. The opposite ends of the antenna 50 protrude through opposite ends of the connector body 100.

The construction of the connector body 100 and the main path pattern 125 may be substantially the same as that of the connector body 100, which was described above with reference to FIGURES 1 to 5.

The main path pattern 125 may be implemented in the same fashion as those of the first to third embodiments shown in FIGURES 1 to 5.

The antenna 50 has a predetermined length of, for example, 75cm.

The antenna 50 is disposed on the main path pattern 125.

Here, the opposite ends of the antenna 50 protrude through the opposite ends of the connector body 100 to a predetermined length.

The antenna 50 disposed on the main path pattern 125 can be disposed in a predetermined area of the connector body 100.

The main path pattern 125 according to the above-mentioned embodiments has a plurality of pattern portions, which are formed along various path directions in the predetermined area of the connector body 100, so that the antenna 50 having a predetermined length of, for example, 75cm can be easily housed in the area of the connector body 100, where the main path pattern 125 is formed.

The first board 300 also has a sub-path pattern 320 connecting the connector 310 to the main path pattern 125, and the second board 400 also has a sub-path pattern 420 connecting the connector 410 to the main path pattern 125.

The sub-path patterns 320 and 420 may have the same construction as that of the path patterns 120, 121 and 122, which were described above with reference to FIGURES 1 to 5.

The second board 400 is provided with a receiver 430 that receives voice information. The receiver 430 may be implemented as an FM radio receiver.

As shown in FIGURE 8, the board 400 having the receiver 430 is also provided with an antenna output terminal 440, which is electrically connected to the receiver 430.

The antenna output terminal 440 is also electrically connected to a signal line 500.

The signal line 500 is a predetermined length of electric wire that outputs voice signal to an external device. The signal line 500 may be implemented as an earphone line or a speaker line.

In addition, a predetermined length of antenna 510, as shown in FIGURE 8, may be disposed inside the signal line 500.

Thus, the length of the antenna 50 disposed on the main path pattern 125 and the sub-path patterns 320 and 420 can be increased by the length of the antenna 510 inside the signal line 500.

This, as a result, can improve the sensitivity of receiving voice information at the receiver 430.

As shown in FIGURE 9, one of the boards 300 and 400 (for example the board 400) may include a plurality of board bodies 401, which are placed one above another at a predetermined interval from each other.

In this fashion, the board bodies 401 form a multi-layer structure.

Each of the board bodies 401 may also have an antenna pattern 421, which is shaped to extend the length of the antenna that is disposed on the sub-path pattern 420.

Hence, the length of the antenna pattern 421 can be extended according to the number of the board bodies 401, which are placed one above another.

That is, the antenna 50 of the invention can be further extended by the length of the main path pattern 125, the length of the sub-path patterns 320 and 420 and the length of the antenna pattern 421, which are added together.

In the mobile communication device of the invention, the length of the antenna 50 can be extended by the length of the main path pattern 125, the length of the sub-path patterns 320 and 420 and the length of the antenna pattern 421, so that the antenna 50 can be easily mounted on a predetermined inside area of the mobile communication device.

Furthermore, the mobile communication device of the invention can house the entire length of the antenna 50. In the case where the antenna 50 is required to be longer than the predetermined length, the length of the signal line 500 can be extended or the number of the board bodies 401 of the second board 400 can be increased in order to meet the requirements.

## Claims

1. A mobile communication device comprising:
a first body (210);
a second body (220) slidably coupled to the first body; and
an antenna device comprising:
a plurality of boards (300, 400) each being made of a rigid or flexible material and each having a respective connector (310, 410);
a flexible connector body (100); and
an antenna (50) disposed on the flexible connector body (100), the antenna (50) following a path (120, 121, 122, 125) on the flexible connector body (100) from one end of the flexible connector body (100) to an opposite end of the flexible connector body (100), and the antenna (50) having opposite ends thereof protruding from said opposite ends of the flexible connector body (100);
wherein the plurality of boards (300, 400) comprises a first board (300) disposed inside the first body (210) and a second board (400) disposed inside the second body (220);
wherein the antenna (50) is electrically connected, at opposite ends thereof, to the respective connectors (310, 410) of the first board (300) and the second board (400);
wherein each of the first board (300) and the second board (400) comprises an antenna portion disposed on the respective first and second board (300, 400) and following a respective further path (320, 420), an end of which is connected to the respective connector (310, 410) of the first and second boards (300, 400);
wherein each end of the antenna (50) protruding from the flexible connector body (100) is connected to the respective connectors (310, 410) of the first and second boards (300, 400) such that the antenna (50) is connected to the antenna portions; and
wherein the path (120, 121, 122, 125) and the further path comprise a plurality of path portions extending in a longitudinal direction along the flexible connector body (100) and the first and second boards (300, 400) respectively, said path and further paths of the first and second boards are configured to form the radiating portion of an antenna.

2. A mobile communication device according to claim 1, further comprising a signal line (500) arranged to output a voice signal to an external device;
wherein one of the plurality of boards (400) comprises:
a receiver (430) arranged to receive voice information; and
an antenna output terminal (440) electrically connected to the receiver;
wherein the antenna output terminal (440) is further connected to the signal line (500); and
wherein a length of an additional antenna is provided inside the signal line (500).

3. A mobile communication device according to any of claims 1 to 2, wherein one of the plurality of boards (400) comprises a plurality of board bodies (401) arranged to form a multi-layer structure;
wherein the board bodies (401) comprise an antenna portion disposed on each of the board bodies (401) and following a respective pattern (421) across the board bodies (401); and
wherein an end of the antenna portion on one of the board bodies (401) is connected to the respective connector (410) of the one of the plurality of boards (400) such that the antenna (50) is connected to the antenna portion.

## Patentansprüche

1. Mobilkommunikationsvorrichtung, umfassend:
einen ersten Körper (210);
einen zweiten Körper (220), der gleitbar mit dem ersten Körper gekoppelt ist; und
eine Antennenvorrichtung, umfassend:
eine Vielzahl von Platten (300, 400), die jeweils aus einem starren oder flexiblen Material hergestellt sind und einen jeweiligen Verbinder (310, 410) aufweisen;
einen flexiblen Verbinderkörper (100); und
eine Antenne (50), die auf dem flexiblen Verbinderkörper (100) angeordnet ist, wobei die Antenne (50) einem Pfad (120, 121, 122, 125) auf dem flexiblen Verbinderkörper (100) von einem Ende des flexiblen Verbinderkörpers (100) zu einem gegenüberliegenden Ende des flexiblen Verbinderkörpers (100) folgt, und
die Antenne (50) gegenüberliegende Enden davon aufweist, die von den gegenüberliegenden Enden des flexiblen Verbinderkörpers (100) vorragen;
wobei die Vielzahl von Platten (300, 400) eine erste Platte (300), die im Inneren des ersten Körpers (210) angeordnet ist, und eine zweite Platte (400), die im Inneren des zweiten Körpers (220) angeordnet ist, umfasst;
wobei die Antenne (50) an gegenüberliegenden Enden davon mit den jeweiligen Verbindern (310, 410) der ersten Platte (300) und der zweiten Platte (400) elektrisch verbunden ist;
wobei jede der ersten Platte (300) und der zweiten Platte (400) einen Antennenabschnitt umfasst, der auf der jeweiligen ersten und zweiten Platte (300, 400) angeordnet ist und einem jeweiligen weiteren Pfad (320, 420) folgt, von dem ein Ende mit dem jeweiligen Verbinder (310, 410) der ersten und zweiten Platte (300, 400) verbunden ist;
wobei jedes vom flexiblen Verbinderkörper (100) vorragende Ende der Antenne (50) mit dem jeweiligen Verbinder (310, 410) der ersten und zweiten Platte (300, 400) verbunden ist, so dass die Antenne (50) mit den Antennenabschnitten verbunden ist; und
wobei der Pfad (120, 121, 122, 125) und der weitere Pfad eine Vielzahl von Pfadabschnitten umfassen, die sich in einer Längsrichtung entlang dem flexiblen Verbinderkörper (100) bzw. der ersten und zweite Platte (300, 400) erstrecken, wobei der Pfad und weitere Pfade der ersten und zweiten Platte konfiguriert sind, um den strahlenden Abschnitt einer Antenne zu bilden.

2. Mobilkommunikationsvorrichtung nach Anspruch 1, ferner umfassend eine Signalleitung (500), die eingerichtet ist, um ein Sprachsignal an eine externe Vorrichtung auszugeben;
wobei eine der Vielzahl von Platten (400) umfasst:
einen Empfänger (430), der angeordnet ist, um Sprachinformationen zu empfangen; und
einen Antennenausgangsanschluss (440), der elektrisch mit dem Empfänger verbunden ist;
wobei der Antennenausgangsanschluss (440) ferner mit der Signalleitung (500) verbunden ist; und
wobei eine Länge einer zusätzlichen Antenne im Inneren der Signalleitung (500) bereitgestellt ist.

3. Mobilkommunikationsvorrichtung nach einem der Ansprüche 1 bis 2, wobei eine der Vielzahl von Platten (400) eine Vielzahl von Plattenkörpern (401) umfasst, die angeordnet sind, um eine mehrschichtige Struktur zu bilden;
wobei die Plattenkörper (401) einen Antennenabschnitt umfassen, der auf jedem der Plattenkörper (401) angeordnet ist und einem jeweiligen Muster (421) über die Plattenkörper (401) folgt; und
wobei ein Ende des Antennenabschnitts auf einem der Plattenkörper (401) mit dem jeweiligen Verbinder (410) der einen der Vielzahl von Platten (400) verbunden ist, so dass die Antenne (50) mit dem Antennenabschnitt verbunden ist.

## Revendications

1. Dispositif de communication mobile, comprenant :
un premier corps (210) ;
un deuxième corps (220) couplé de façon coulissante au premier corps ; et
un dispositif d'antenne comprenant :
une pluralité de cartes (300, 400), chacune étant réalisée avec une matière rigide ou flexible, et chacune étant dotée d'un connecteur respectif (310, 410) ;
un corps de connecteur flexible (100) ; et
une antenne (50) disposée sur le corps de connecteur flexible (100), l'antenne (50) suivant un trajet (120, 121, 122, 125) sur le corps de connecteur flexible (100), d'un bout du corps de connecteur flexible (100) à un bout opposé du corps de connecteur flexible (100), et
l'antenne (50) possédant des bouts opposés connexes saillants desdits bouts opposés du corps de connecteur flexible (100) ;
la pluralité de cartes (300, 400) comprenant une première carte (300) disposée à l'intérieur du premier corps (210), et une deuxième carte (400) disposée à l'intérieur du deuxième corps (220) ;
l'antenne (50) étant connectée électriquement, à des extrémités opposées de celle-ci, aux connecteurs respectifs (310, 410) de la première carte (300) et de la deuxième carte (400) ;
chacune de la première carte (300) et de la deuxième carte (400) comprenant une partie d'antenne disposée sur la première et la deuxième carte (300, 400) respectives, et suivant un autre trajet (320, 420) respectif, une extrémité duquel étant connectée au connecteur respectif (310, 410) des première (300) et deuxième (400) cartes ;
chaque extrémité de l'antenne (50) faisant saillie du corps du connecteur flexible (100) étant connectée aux connecteurs correspondants (310, 410) des première et deuxième cartes (300,400) de sorte que l'antenne (50) soit connectée aux parties d'antenne ; et
le trajet (120, 121, 122, 125) et l'autre trajet comprennent une pluralité de parties de trajet s'étendant dans une direction longitudinale le long du corps du connecteur flexible (100) et des première et deuxième cartes (300, 400) respectivement, lesdits trajet et autres trajets des première et deuxième cartes étant configurés pour former la partie rayonnante d'une antenne.

2. Dispositif de communication mobile selon la revendication 1, comprenant en outre une ligne de signal (500) agencée pour émettre un signal vocal à un dispositif externe ;
une de la pluralité de cartes (400) comprenant :
un récepteur (430) agencé pour recevoir des informations vocales ; et
une borne de sortie d'antenne (440) connectée électriquement au récepteur ;
and la borne de sortie d'antenne (440) étant connectée en outre à la ligne de signal (500) ; et
une longueur d'une antenne additionnelle étant agencée à l'intérieur de la ligne de signal (500).

3. Dispositif de communication mobile selon une quelconque des revendications 1 à 2, une de la pluralité de cartes (400) comprenant une pluralité de corps de carte (401) agencée pour constituer une structure multicouches ;
les corps de carte (401) comprenant une partie d'antenne disposée sur chacun des corps de carte (401) et suivant une configuration respective (421) sur les corps de carte (401) ; et
une extrémité de la partie d'antenne sur un des corps de carte (401) étant connectée au connecteur respectif (410) d'une de la pluralité de cartes (400) de sorte que l'antenne (50) soit connectée à la partie d'antenne.
